# EUROPÄISCHE PATENTSCHRIFT

(11) **EP 1 326 730 B1**
(45) Veröffentlichungstag und Bekanntmachung des Hinweises auf die Patenterteilung: **23.09.2009**
(21) Anmeldenummer: 01980472.3
(22) Anmeldetag: 02.10.2001
(51) Int. Cl.: B23K 3/06, H05K 13/08, B25J 9/16, B23Q 17/24, B23Q 3/18

(54) **VORRICHTUNG ZUR POSITIONIERUNG EINES WERKZEUGES GEGENÜBER EINEM WERKSTÜCK**
DEVICE FOR POSITIONING A TOOL IN RELATION TO A WORKPIECE
DISPOSITIF POUR POSITIONNER UN OUTIL PAR RAPPORT A UNE PIECE D'USINAGE

(30) Priorität: 06.10.2000 DE 10049584
(43) Veröffentlichungstag der Anmeldung: 16.07.2003
(73) Patentinhaber: Pac Tech - Packaging Technologies GmbH, 14641 Nauen (DE)
(72) Erfinder: ZAKEL, Elke, 14612 Falkensee (DE); KASULKE, Paul, 10551 Berlin (DE); UEBEL, Oliver, 10967 Berlin (DE); TITERLE, Lars, 10999 Berlin (DE)
(74) Vertreter: von Bülow, Tam
(86) Internationale Anmeldenummer: PCT/EP2001/011422
(87) Internationale Veröffentlichungsnummer: WO 2002/028590

(56) Entgegenhaltungen:
- EP-A- 1 014 438
- US-A- 2 696 565
- US-A- 4 187 051
- US-A- 5 249 035
- US-A- 5 501 388

## Beschreibung

Die Erfindung bezieht sich auf eine Vorrichtung zur Positionierung eines Werkzeuges gegenüber einem Werkstück.

Die US-A-4,187,051 zeigt eine Vorrichtung zur Positionierung eines Werkzeuges gegenüber einem Werkstück mit drei Antrieben für eine Positionierung des Werkzeuges relativ zu dem Werkstück in mindestens drei Raumachsen. Die Position des Werkstückes wird mit Hilfe von zwei Kameras bestimmt, die längs je einer Raumachse ausgerichtet sind, wobei diese beiden Raumachsen senkrecht zueinander stehen. Die Kameras reagieren dabei auf Hell-/Dunkel-Kontraste des Werkstückes und erfassen damit die Lage und Ausrichtung des Werkstückes. Eine der Kameras ermittelt ein grobes Lagebild, während die andere Kamera ein hochauflösenderes Bild für eine Feinpositionierung erfaßt. Beide Kameras und das Werkzeug, das dort ein Greiferarm ist, sind durch Antriebe beweglich. Die Lageerfassung erfolgt dadurch, daß die Kameras so lange bewegt werden, bis das von den Kameras aufgenommene Bild mit einem gespeicherten Bild übereinstimmt. Damit ist dann das mit einer der Kameras antriebsmäßig gekoppelte Werkzeug relativ zum Werkstück korrekt ausgerichtet.

Die US-A-5,501,388 beschreibt eine Bondvorrichtung, die zur Detektion eines Werkstücks eine einzige Kamera aufweist. Zum Bonden wird als Werkzeug eine Kapillare verwendet, die Materialstücke dem Werkstück zuführt.

Die EP 0 859 618 B1 zeigt eine Vorrichtung zum relativen Positionieren einer Kapillare als Werkzeug und einem Werkstück mittels Antrieben, die eine Relativbewegung längs der drei kartesischen Raumachsen ermöglichen.

Bei Werkzeugmaschinen ist es üblich, die Antriebe für die einzelnen Raumachsen über Schrittmotoren zu steuern, wobei dann Inkremente der Schrittmotoren gezählt werden, was ein Maß für die Position ist. Für eine genaue Bearbeitung ist dann aber auch eine extrem genaue Aufspannung des Werkstückes erforderlich.

Ein wichtiges Anwendungsgebiet der Erfindung ist die Applikation von Materialstücken auf ein Werkstück.

Materialstücke im Sinne der vorliegenden Erfindung können Stücke aus jeglichem Material sein, die in fester oder flüssiger Form vorliegen. Hierbei kann es sich um lötfähige Materialien, wie Gold, Kupfer, Zinn, Glas oder Kunststoff, handeln, die insbesondere als Mikromaterialstücke in Form von Lötkugeln, Glaskugeln oder Kunststoffkugeln vorliegen. Es kann sich auch um Keramikstücke handeln sowie um Bauteile, wie z.B. Miniaturschaltkreise, SMD-Bauteile oder ähnliches. Ganz allgemein kann jegliches Material mit der Erfindung appliziert werden.

Die Applikation von Materialstücken, wie z.B. von Lotkugeln, in Form sog. Bumper erfordert ebenfalls höchste Präzision der Positionierung des Werkzeuges, wie z.B. einer Kapillare, die die Lotkugel zuführt. Das Aufspannen der Werkstücke ist demgemäß sehr aufwendig, da es die Arbeitsgenauigkeit unmittelbar bestimmt. Auch bei sonstigen Arbeitsvorgängen, wie dem Bestücken von Leiterplatten mit Bauelementen, dem Entfernen von Lötstellen auf Platinen usw., ist oftmals höchste Positioniergenauigkeit des Werkzeuges gefordert.

Aufgabe der Erfindung ist es daher, die Vorrichtung dahingehend zu verbessern, daß der Arbeitsaufwand für das Aufspannen der Werkstücke reduziert ist und trotzdem die erforderliche Positioniergenauigkeit eingehalten wird.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung besteht darin, die relative Positionierung über Kameras zu steuern. Die Genauigkeit des Spannens der Werkstücke hat dann keinen Einfluß auf die Arbeitsgenauigkeit, da die Positionierung des Werkzeuges über Kameras gesteuert wird, die sich am Werkstück selbst orientieren, insbesondere an dessen Kanten.

Im folgenden wird die Erfindung anhand von Ausführungsbeispielen im Zusammenhang mit der Zeichnung ausführlicher erläutert. Es zeigt:
- Fig. 1: eine Prinzipskizze einer Vorrichtung nach der Erfindung nach einem ersten Ausführungsbeispiel;
- Fig. 2: eine Prinzipskizze nach einem zweiten Ausführungsbeispiel der Erfindung;
- Fig. 3: eine Prinzipskizze eines dritten Ausführungsbeispiels der Erfindung;
- Fig. 4: ein schematisches Bild, das von der Kamera gesehen wird, die in y-Richtung montiert ist und nachdem das Werkzeug in x- und z-Richtung positioniert wird; und
- Fig. 5: ein Bild der zweiten Kamera, anhand der das Werkzeug in Y-Richtung positioniert wird.

Gleiche Bezugszeichen in den einzelnen Figuren bezeichnen gleiche bzw. funktionell einander entsprechende Teile.

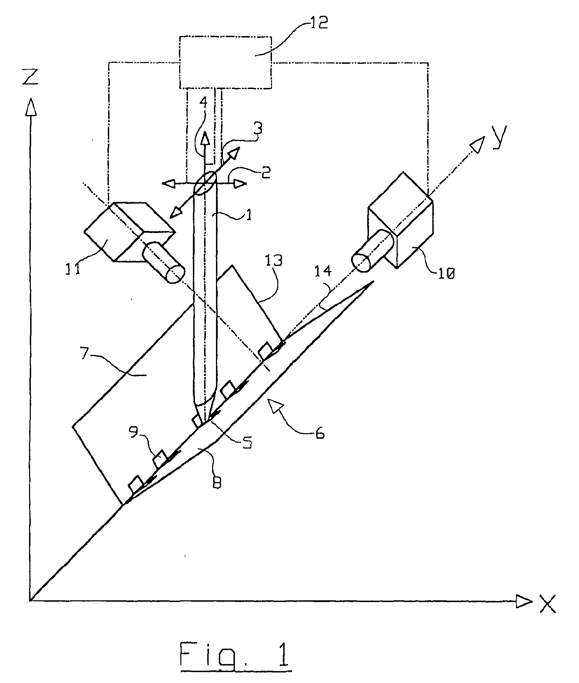

Obwohl sich die Ausführungsbeispiele der Figuren 1-5 auf die Applikation von Lotkugeln beziehen, sei ausdrücklich darauf hingewiesen, daß jegliche Positionierung eines Werkzeuges gegenüber einem Werkstück mit der Erfindung möglich ist und auch beispielsweise die Applikation von Materialstücken, wie eingangs definiert, durchgeführt werden kann sowie auch das Entfernen von Materialstücken, wie z.B. Lötstellen von einem Gegenstand.

Zunächst sei auf Fig. 1 Bezug genommen. Eine Kapillare 1, durch die eine Lotkugel appliziert werden kann, ist mittels dreier Antriebe 2, 3, 4 relativ zu einem Werkstück 6 längs der drei kartesischen Raumachsen x, y und z verschieblich. Selbstverständlich handelt es sich hierbei um eine Relativverschiebung, d.h. die Antriebe 2, 3 und 4 können auch einem nicht dargestellten Kreuztisch zugeordnet sein, auf welchem das Werkstück 6 aufgespannt ist.

An der Spitze 5 der Kapillare 1 wird das Lotmittel dem Werkstück zugeführt und dort in bekannter Weise durch ein Laser-Impuls aufgeschmolzen. Das Werkstück 6 habe hier zwei senkrecht zueinander stehende Flächen 7 und 8, wobei das Werkstück so aufgespannt ist, daß die Schnittlinie der beiden Flächen 7 und 8 genau in einer Achse, hier der y-Achse, liegt. Damit stehen die Flächen 7 und 8 jeweils unter einem Winkel von 45° zur x,y-Ebene.

Die Antriebe 2, 3 und 4 sind nun so zu steuern, daß die Spitze 5 der Kapillare an vorbestimmten Stellen 9 des Werkstückes 6 positioniert wird, damit dort eine Lötkugel appliziert und ein "Bumper" aufgelötet wird. Für diese Steuerung der Antriebe sind zwei Kameras 10 und 11 vorgesehen, deren Bilder von einer Steuereinheit 12 ausgewertet werden, woraus Steuerbefehle für die Antriebe 2, 3 und 4 ausgegeben werden.

Eine Kamera, hier die Kamera 10, ist im wesentlichen in der y-Achse ausgerichtet. Mit ihr wird daher die relative Lage zwischen der Spitze 5 der Kapillare 1 und dem Werkstück 6 bezüglich der x,z-Ebene erfaßt. Die Verarbeitung der Bilder der Kameras erfolgt über eine Kantenerkennung. Die Kamera 10 erfaßt somit im wesentlichen ein Bild der beiden ihr zugewandten Kanten 13 und 14 der Flächen 7 bzw. 8 sowie die Spitze 5 der Kapillare 1.

Die zweite Kamera 11 ist so positioniert, daß sie senkrecht zu einer Fläche 8 des Werkstückes ausgerichtet ist. Mit ihr wird also die relative Lage zwischen Kapillare und Werkstück in Bezug auf die y-Achse überwacht und der Antrieb 3 für diese Achse gesteuert. Die Bildauswertung kann hier die Kante 14 der Fläche 8 auswerten oder auch die Kontur der Stelle 9, an denen das Lotmittel aufgebracht werden soll.

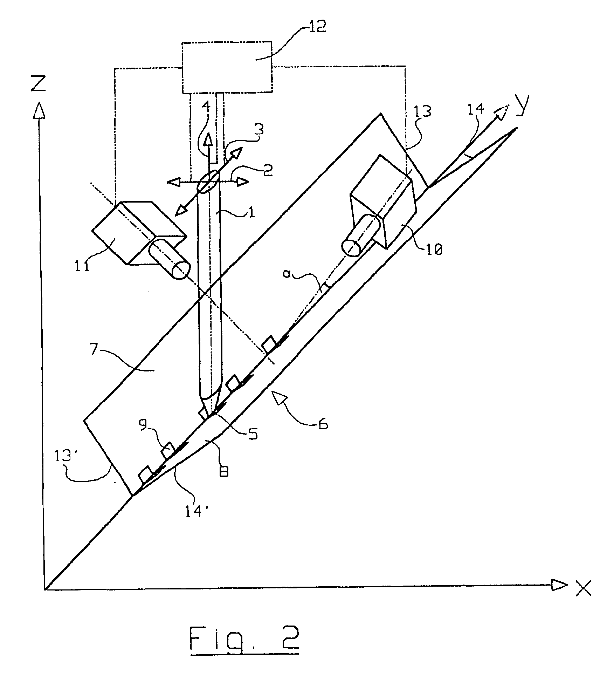

Im Ausführungsbeispiel der Fig. 2 ist das Werkstück 6 in y-Richtung so lang, daß es mit der Kamera 10 kollidieren würde. Die Kamera 10 ist daher unter einem Winkel α gegenüber der y-Achse ausgerichtet, wobei hier das Werkstück 6 und nicht die Kapillare 1 in y-Richtung bewegt wird. Die Kamera 10 erfaßt dabei die Kanten 13' und 14' der Flächen 7 und 8 sowie die Position der Spitze 5 in Bezug auf die x,z-Ebene.

Die Kamera 11 ist wieder in gleicher Weise wie im Ausführungsbeispiel der Fig. 1 ausgerichtet, d.h. senkrecht zur Fläche 8 des Werkstückes 6.

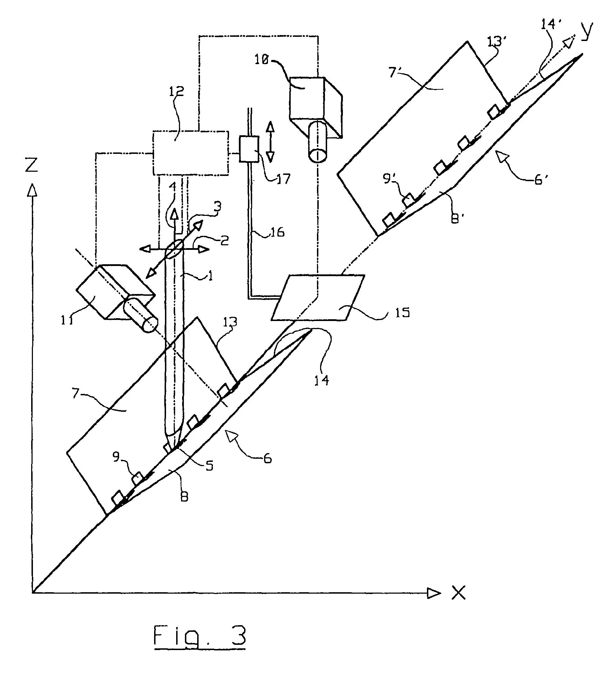

Beim Ausführungsbeispiel der Fig. 3 sind mehrere Werkstükke 6, 6' etc. längs der y-Achse hintereinander aufgereiht, wobei hier ebenfalls bei stillstehender Kapillare 1 die Werkstücke zumindest längs der y-Achse bewegt werden. Da auch hier eine in der y-Achse positionierte Kamera mit den Werkstücken kollidieren würde, ist vorgesehen, daß ein Spiegel 15 zwischen die aufeinanderfolgenden Werkstücke 6 und 6' gefahren werden kann, wobei dieser Spiegel hier gegenüber der x,y-Ebene um 45° gekippt ist. Die Kamera ist dann parallel zur z-Achse ausgerichtet und überträgt ein Bild an die Steuerung 12, das dem Bild entspricht, das unmittelbar in der y-Achse aufgenommen würde. Der Spiegel 15 kann über einen Arm 16 und einen Antrieb 17 zumindest parallel zur z-Achse bewegt werden, damit einzelne Werkstücke unter ihm passieren können. Sobald das nächste Werkstück zur Bearbeitung ansteht, wird der Spiegel 15 dann wieder in z-Richtung nach unten verfahren.

Die Kamera 11 ist wiederum senkrecht zur Ebene 8 des Werkstückes 6 positioniert.

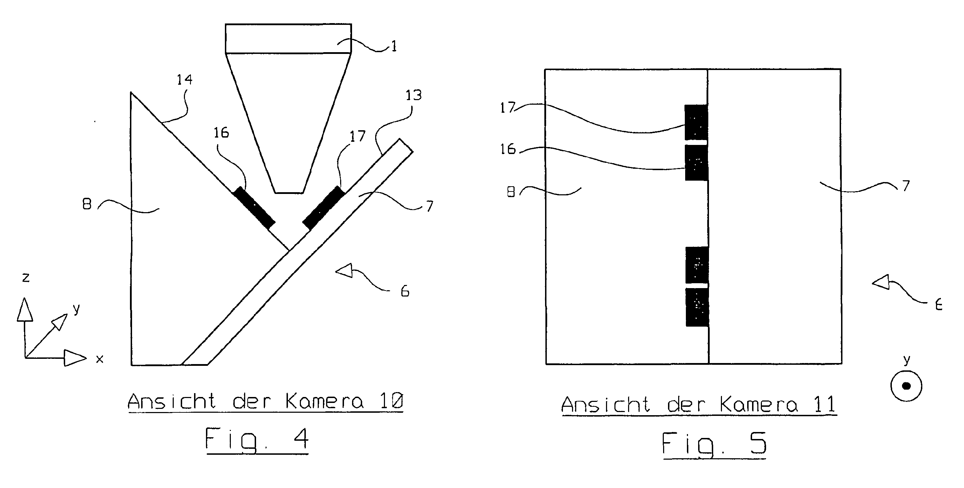

Fig. 4 zeigt schematisch das von der Kamera 10 "gesehene" Bild mit dem Werkzeug 1, dem Werkstück 6 in Form von zwei Leiterbahnplatten 7 und 8 sowie den Kanten 13 und 14, an denen sich die Bildauswertung und die Steuerung orientieren. Es können auch auf dem Werkstück sog. Pads 16 und 17 aufgebracht sein, die ihrerseits scharfe Kanten haben, an denen sich die Bildauswertung orientieren kann. Diese Pads sind in vordefinierter Lage zu der Lotstelle angeordnet. Mit dem in Fig. 4 dargestellten Bild läßt sich das Werkzeug 1 in z- und x-Richtung positionieren.

Fig. 5 zeigt ein Bild, daß von der Kamera 11 gesehen wird, die die Positionierung anhand der Kanten oder der Pads in y-Richtung vornimmt.

## Patentansprüche

1. Vorrichtung zur Positionierung eines Werkzeuges (1) gegenüber einem Werkstück (6), mit drei Antrieben (2, 3, 4), die eine Positionierung des Werkzeuges (1) relativ zu dem Werkstück (6) in mindestens drei Raumachsen (x, y, z) ermöglichen, wobei zur relativen Positionierung zwischen dem Werkzeug (1) und dem Werkstück (6) zwei Kameras (10, 11) vorgesehen sind, von denen die erste (10) ein Bild einer ersten Werkstückkante im wesentlichen längs einer Raumachse (y) aufnimmt und die zweite Kamera ein Bild längs einer senkrecht zu dieser Raumachse (y) und die zweite Kamera (11) senkrecht zu einer Fläche des Werkstücks ausgerichtet ist, und eine Steuereinheit vorgesehen ist, mittels derer aufgrund der beiden Bilder dieser Kameras (10, 11) die Position des Werkzeuges relativ zum Werkstück entlang der drei kartesischen Raumachsen (x-, y-, z-Achse) auswertet und hieraus Steuerbefehle für die drei Antriebe (2, 3, 4) entlang dieser Achsen ausgegeben werden.

2. Vorrichtung nach Anspruch 1, **dadurch gekennzeichnet, daß** die erste Kamera (10) unter einem spitzen Winkel (α) gegenüber der Raumachse (y) geneigt ausgerichtet ist.

3. Vorrichtung nach Anspruch 1, **dadurch gekennzeichnet, daß** die erste Kamera (10) senkrecht zu der Raumachse (y) ausgerichtet ist und über einen Spiegel (15), der gegenüber der x/y-Ebene unter einem Winkel von 45° geneigt ist, ein Bild des Werkstücks (6) im wesentlichen längs der Raumachse (y) aufnimmt.

4. Vorrichtung nach Anspruch 3, **dadurch gekennzeichnet, daß** der Spiegel (15) längs der Achse (z), in der die erste Kammer (10) ausgerichtet ist, verschieblich angeordnet ist.

5. Vorrichtung nach einem der Ansprüche 1 bis 4, **dadurch gekennzeichnet,**
**daß** das Werkzeug eine Kapillare (1) ist, die Materialstücke dem Werkstück (6) zuführt.

6. Vorrichtung nach Anspruch 5, **dadurch gekennzeichnet, daß** die Materialstücke schmelzbares Metall, wie Lötmaterial, insbesondere Gold, Kupfer, Zink, Glas oder Kunststoff, sind, die in fester oder flüssiger Form vorliegen, oder Keramikstücke.

7. Vorrichtung nach Anspruch 6, **dadurch gekennzeichnet, daß** die Verflüssigung des schmelzbaren Materials durch eine Lasereinrichtung (12) erfolgt.

## Claims

1. Device for positioning a tool (1) in relation to a workpiece (6) with three drives (2, 3, 4) which enable a positioning of the tool (1) relative to the workpiece (6) in at least three spatial axes (x, y, z), wherein for a relative positioning between the tool (1) and the workpiece (6) two cameras (10, 11) are provided, the first (10) of them is taking an image of a first edge of the workpiece essentially along one spatial axis (y) and the second camera is taking an image along perpendicular to this spatial axis (y) and the second camera (11) being oriented perpendicular to a surface of the workpiece, and a control unit is provided whereby, based on the two images from said cameras (10, 11), the position of the tool relative to the workpiece along the three cartesian spatial axes (x-, y-, z-axis) is analyzed and wherefrom control commands for the three drives (2, 3, 4) along said axes is issued.

2. Device according to claim 1, **characterized in that** the first camera (10) is oriented at an acute angle (α) in relation to the spatial axis (y).

3. Device according to claim 1, **characterized in that** the first camera (10) is oriented vertically with respect to the spatial axis (y) and is taking an image of the workpiece (6) essentially along the spatial axis (y) via a mirror (15) which is tilted with respect to the x/y-plane by an angle of 45°.

4. Device according to claim 3, **characterized in that** the mirror (15) is arranged to shift along the axis (z) in which the first camera (10) is oriented.

5. Device according to one of claims 1 to 4, **characterized in that** the tool is a capillary (1) feeding pieces of material to the workpiece (6).

6. Device according to claim 5, **characterized in that** the pieces of material are meltable metal such as solder, in particular gold, copper, zinc, glas or plastic in solid or liquid form, or pieces of ceramic.

7. Device according to claim 6, **characterized in that** the liquefaction of the meltable material is carried out by a laser arrangement (12).

## Revendications

1. Dispositif de positionnement d'un outil (1) par rapport à une pièce à usiner (6), avec trois entraînements (2, 3, 4), qui permettent un positionnement de l'outil (1) par rapport à la pièce à usiner (6) dans au moins trois axes spatiaux (x, y, z), dans lequel deux caméras (10, 11) sont prévues pour le positionnement relatif entre l'outil (1) et la pièce à usiner (6), dont la première caméra (10) enregistre une image d'une première arête de pièce à usiner essentiellement le long d'un axe spatial (y) et la deuxième caméra enregistre une image le long d'un axe perpendiculaire à cet axe spatial (y) et la deuxième caméra (11) est orientée perpendiculairement à une surface de la pièce à usiner, et une unité de commande est prévue, au moyen de laquelle la position de l'outil par rapport à la pièce à usiner le long des trois axes cartésiens (axes des x, des y, des z) est évaluée sur la base des deux images de ces caméras (10, 11), et des instructions de commande sont émises à partir de là pour les trois entraînements (2, 3, 4) le long de ces axes.

2. Dispositif selon la revendication 1, **caractérisé en ce que** la première caméra (10) est orientée de manière inclinée par rapport à l'axe spatial (y) selon un angle aigu (α).

3. Dispositif selon la revendication 1, **caractérisé en ce que** la première caméra (10) est orientée perpendiculairement à l'axe spatial (y) et enregistre une image de la pièce à usiner (6) essentiellement le long de l'axe spatial (y) par le biais d'un miroir (15), qui est incliné par rapport au plan x/y selon un angle de 45°.

4. Dispositif selon la revendication 3, **caractérisé en ce que** le miroir (15) est agencé de manière déplaçable le long de l'axe (z), selon lequel la première chambre (10) est orientée.

5. Dispositif selon l'une quelconque des revendications 1 à 4, **caractérisé en ce que**
l'outil est un capillaire (1) qui amène des particules de matière à la pièce à usiner (6).

6. Dispositif selon la revendication 5, **caractérisé en ce que** les particules de matière sont en un métal fusible, comme une matière de brasage, en particulier de l'or, du cuivre, du zinc, du verre ou une matière plastique, qui existent sous forme solide ou liquide, ou des particules de céramique.

7. Dispositif selon la revendication 6, **caractérisé en ce que** la matière fusible est liquéfiée par un dispositif laser (12).
